# EUROPEAN PATENT SPECIFICATION

(11) **EP 2 831 434 B1**
(45) Date of publication and mention of the grant of the patent: **18.07.2018**
(21) Application number: 12713056.5
(22) Date of filing: 28.03.2012
(51) Int. Cl.: F16C 11/00

(54) **Spherical bearing comprising a support**
Einen Träger enthaltendes Kugellager
Palier sphérique comprenant un support

(43) Date of publication of application: 04.02.2015
(73) Proprietor: Schaublin SA, 2800 Delemont (CH)
(72) Inventor: MONNIN, Alain, CH-2822 Courroux (CH); MOTSCHI, René, CH-2800 Delémont (CH); CHARMILLOT, Philippe, CH-2832 Rebeuvelier (CH)
(74) Representative: Bjerkéns Patentbyrå KB (Stockholm)
(86) International application number: PCT/EP2012/055484
(87) International publication number: WO 2013/143582

(56) References cited:
- EP-A1- 1 096 161
- EP-A2- 0 867 158
- EP-A2- 1 114 942
- DE-C1- 4 338 916
- FR-A1- 2 796 110
- US-A1- 2006 051 160

## Description

### Technical Field

The present invention relates generally to a spherical bearing and, more particularly, to a spherical bearing with a support having a conical inside surface.

### Background

Spherical plain bearings have been devised for the purpose of accommodating misalignment. These types of bearings have spherical contact surfaces which allow an inner race to rotate with multiple degrees of freedom while positioned within an outer race. This freedom of movement capability allows this type of bearing to self-align such that it automatically adjusts to misalignment which may occur due to the application of loading forces, machining tolerances, welding distortions, or mounting deformations due to static and dynamic forces. Spherical plain bearings can be used where oscillating, tilting, or skewing movements must be permitted. A spherical bearing is known from EP 1 114 942 A2.

### Summary

In one aspect, the present invention is directed to a spherical bearing according to claim 1. The support thereof includes a substantially annular ring defining an axial facing abutment surface and an inside surface. The inside surface is sloped radially outward toward the abutment surface. The annular ring has an outer circumferential surface that has a locking mechanism thereon. The support can be secured substantially between axial ends of the spherical bearing. The support limits axial movement of an inner race of the spherical bearing.

In another aspect, the present invention is directed to a spherical bearing according to claim 13.

In one embodiment, the annular ring has an axial width of about 10 to 20 percent of an axial width of the spherical bearing.

In yet another aspect of the present invention, when the support is installed in the pocket, the support, the conical outer surface and the axial shoulder are in a fatigue resistant compressed state.

### Brief Description of the Drawings

FIG. 1 is a cross sectional view of a support for a spherical bearing;
FIG. 2 is a cross sectional view of the support of FIG. 1 mounted on a spherical bearing;
FIG. 3 is a partial cross sectional view of the support of FIG. 1 shown at an initial stage of installation in the spherical bearing;
FIG. 4 is a partial cross sectional view of the support of FIG. 1 shown at an intermediate stage of installation in the spherical bearing; and
FIG. 5 is a partial cross sectional view of another support shown at an initial stage of installation in the spherical bearing.

### Detailed Description of the Preferred Embodiment

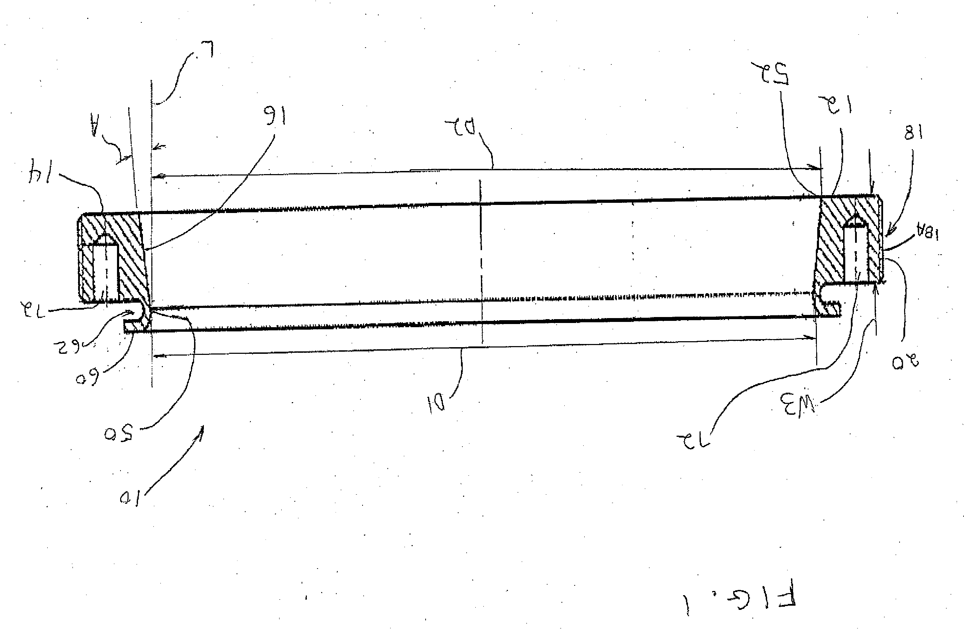

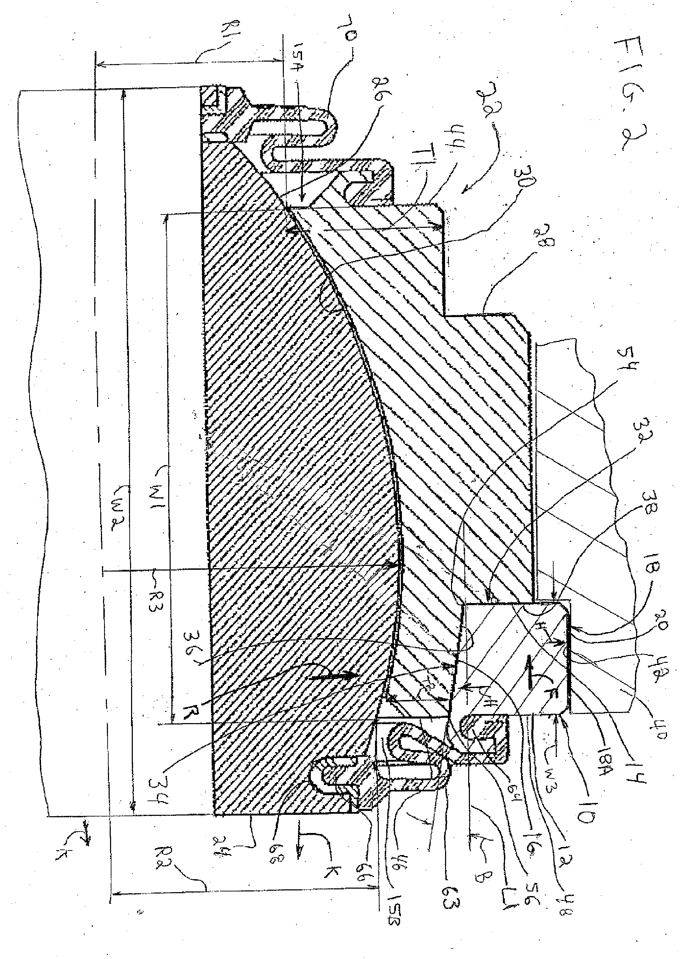

Referring to FIGS. 1 and 2, a support for a spherical bearing is generally designated by the numeral 10. The support 10 is defined by a substantially annular ring 12 having an axial facing abutment surface 14 on one end thereof. The annular ring 12 has an inside surface 16 that is sloped radially outward toward the abutment surface 14. The support 10 has a locking mechanism 18, such a threaded area 18A on an outer circumferential surface 20 of the support. In one embodiment, the threaded area 18A is a male screw thread. The support 10 is operable to be secured substantially between axial ends of a spherical bearing 22 as described below. The support 10 limits axial movement of an inner race defined by the spherical bearing 22, as detailed below. In addition, locating the threaded area 18A on the outer circumferential surface 20 enables the support 10 to acquire a fatigue resistant, compressed state when installed in the spherical bearing and body, as described below. While the locking mechanism 18 is described as being the threaded area 18A, the present invention is not limited in this regard as other locking mechanisms may be employed, including but not limited to bayonet fittings.

In the embodiment illustrated in FIG. 2, the support 10 is disposed in a spherical bearing 22. The spherical bearing 22 is defined by an inner race 24, for example a ball, having a substantially spherical outer surface 26. The spherical bearing 22 includes an outer race 28 positioned around the inner race 24 and having a substantially spherical inner surface 30. The outer race 28 has a pocket 32 formed in an end 34 thereof. The pocket 32 is defined by a conical outer surface 36 and an axial facing shoulder 38. In the illustrated embodiment, the support 10 is threaded into a body 40 having internal threads 42 to secure the support 10 and the spherical bearing 22 in the body 40. The support 10 is removably positioned in the pocket 32 so that the threaded area 18A of the support engages the internal threads 42 of the body 40. The abutment surface 14 of the annular ring 12 seats on the shoulder 38 to secure the outer race 28 to the body 40. The sloped inside surface 16 of the annular ring 12 engages the conical outer surface 36. When the support 10 is installed in the body 40, the support is compressed between the internal threads 42, the shoulder 38 and the conical outer surface 36, thereby imparting fatigue resistance to the support, the outer surface and the internal threads. In addition, the abutment surface 14, the sloped inside surface 16 and the threaded area 18 are in a fatigue resistant compressed state when the support is installed in the pocket 32.

The outer race 28 has a first end 44 defining a first opening 15A having first radius R1 and a second end 46 defining a larger second opening 15B having a second radius R2. The inner race 24 has a maximum radius R3 that is greater than the first radius R1 and the second radius R2. The second opening 15B is sized to receive the inner race 24 by temporarily expanding the second opening during assembly. The first end 44 has a thickness T1 and the second end 46 has a thickness T2 that is less than the thickness T1. The support 10 is disposed in the pocket 32 located proximate the second end. Although the support 10 is shown and described as being positioned in the pocket 32 located proximate the second end, the present invention is not limited in this regard as another support can be employed in a pocket located proximate the first end.

As illustrated in FIG. 2, the outer race 28 has a first width W1 and the inner race 24 has a second width W2. The second width W2 is greater that the first width W1. The support 10 has an axial width W3 that is sized so that the support is positioned in the pocket 32, inboard of opposing ends of the axial ends of the inner race 24. The axial width W3 of the support 10 is about 10 to 20 percent of the width W2 of the inner race 24. In one embodiment a second surface 48 of the support 10 opposite the abutment surface 14 is substantially coplanar with the second end 46 of the outer race 28.

As illustrated in FIGS. 1 and 2 the inside surface 16 of the annular ring 12 has a minimum inside diameter D1 at a first point 50 located a distance of about 70 to 85 percent of the width W3 from the abutment surface 14. The annular ring 12 has a second diameter D2 at a second point 52 which is coplanar with the abutment surface 14. The diameter D2 is greater than the diameter D1. The inside surface 16 is sloped radially outward from the point 50 to point 52 at an angle A of about 8 degrees relative to a longitudinal reference line L. The conical outer surface 36 of the pocket 32 is sloped radially inward from a third point 54 defined by the intersection of the conical surface and the shoulder 38 to a fourth point 56 located at a distal edge of the conical surface. The conical surface 36 slopes radially inward from the third point 54 to the fourth point 56 by an angle B of about 8 degrees relative to the longitudinal reference line L1. While the angle A and the angle B are shown and described as being about 8 degrees, the present invention is not limited in this regard as angles A and B may have other magnitudes, including but not limited to the angle A being greater than the angle B; the angle A being from about zero to about 20 degrees and the angle B being from about zero to about 20 degrees; and the angle A being from about six to about 10 degrees and the angle B being from about six to about 10 degrees.

As illustrated in FIGS. 1 and 2 a lip 60 extends axially from the annular ring 12 at the point 50 and is curved radially outward to form an annular channel 62 for receiving an annular seal 63. One end 64 of the seal 63 is seated in the channel 62 and an opposing end 66 of the seal is seated in a groove 68 formed in the inner race 24. The seal 63 prevents debris from entering an area between the spherical outer surface 26 and the spherical inner surface 30. In one embodiment, another seal 70 is located proximate the first end 44 and extends between the outer race 28 and the inner race 24. The engagement between the threads 42 and the threaded area 18; and the engagement between the conical outer surface 36 and the sloped inside surface 16 sealingly prevents debris from entering the pocket 32, between the outer race 28 and the body 40; and/or into an area adjacent the abutment surface 38.

As illustrated in FIG. 1, the annular ring 12 includes a plurality of axial bores 72 extending partially into the annular ring. The bores 72 are configured to receive a tool (not shown) for applying torque to the annular ring 12 during assembly and disassembly.

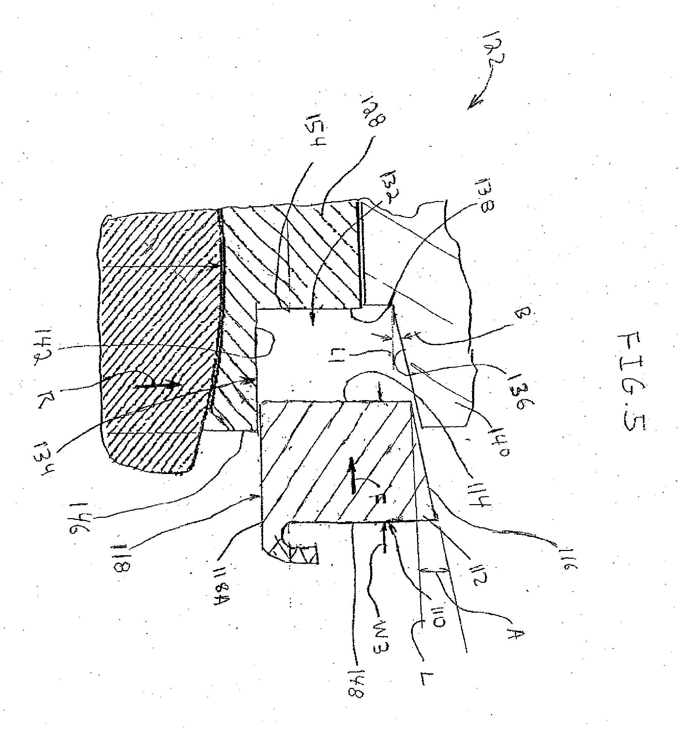

The support 110 and bearing 122 illustrated in FIG. 5 are similar to the support 10 and bearing 22 shown in FIGS. 1-4. Accordingly, similar elements are designated with similar element numbers preceded by the numeral 1. The support 110 is illustrated having an internal threaded area 118A and a conical outer surface 116. The outer race 128 defines a pocket 132 with an outwardly facing male threaded area 142. The body 140 defines an inwardly facing conical surface 136. The conical outer surface 116 defines an angle A relative to a reference line L. The inwardly facing conical surface 136 defines an angle B relative to a reference line L1. The angle A is about 8 degrees and about equal to the angle B. In one embodiment, the angle A is greater than the angle B before the support 110 is installed in the pocket 132. The support 110 is installed into the pocket 132 similar to that described above for the support 10.

In one embodiment, the support 10 is manufactured from a material different from that which the inner race 24 and/or the outer race 28 are manufactured. In one embodiment, the support 10 is manufactured from a material suitable for dampening vibrations transmitted between the inner race 24 and the outer race 28.

During assembly, the annular ring 12 is threaded into the body 40 causing the annular ring to move into the pocket 32 in the general direction indicated by the arrow F. As the annular ring 12 moves into the pocket 32, the inside surface 16 slidingly engages the conical outer surface 36 until the abutment surface 14 engages the shoulder 38. The annular ring 12 generates a radially directed force as indicated by the arrows H which limits outward radial movement of the second end 46 of the outer race 28. For example, when an axial load is applied to the inner race 24 in the general direction of the arrow K, the inner race 24 tends to urge the second end 46 of the outer race 28 outward in the general direction indicated by the arrow R. Thus the annular ring 12 is wedged into the pocket 32 to limit axial movement of the inner race 24 relative to the outer race 28. In addition, the annular ring 12 limits outward radial movement of the second end 46 of the outer race 28. The wedging of the annular ring 12 into the pocket 32 compresses the annular ring, the shoulder 38 and the conical outer surface 36 for resistance to fatigue. The wedging of the annular ring 12 into the pocket causes the abutment surface 14, the sloped inside surface 16 and the threaded area 18A to acquire a fatigue resistant compressed state when the support is installed in the pocket 32. Thus the support 10 is resistant to fatigue failure caused cyclic stresses imparted on the spherical bearing during operation. In addition, the wedging of the support 10 into the pocket 32 prevents the threads 42 and the threaded area 18 from inadvertently unscrewing from one another, thereby establishing a self locking configuration of the support in the pocket. In one embodiment, the wedging of the support 10 into the pocket causes the outer race 28 to be cold formed around the inner race 24. In one embodiment, adjustment of the support 10 in the pocket 32 affects the break-away torque required to cause movement between the inner race 24 and the outer race 28. For example, the magnitude of the break-away torque increases as the support 10 is screwed or otherwise forced into the pocket 32.

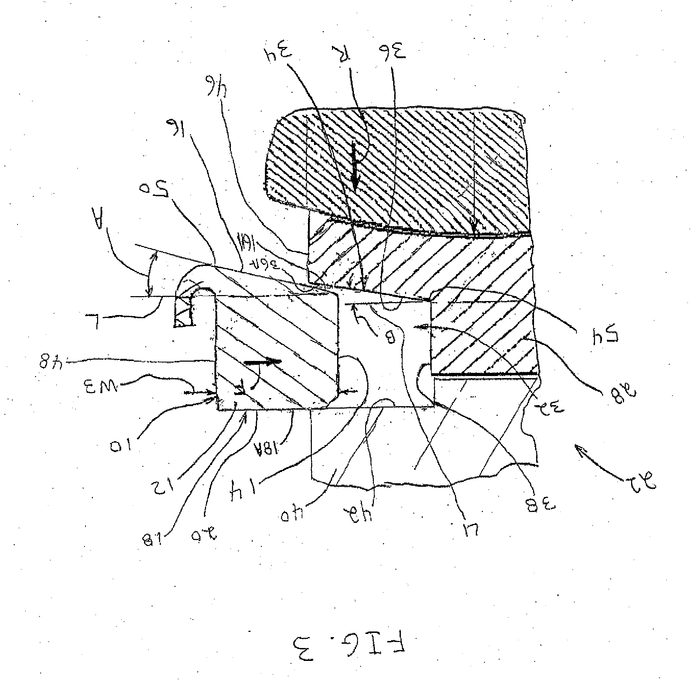

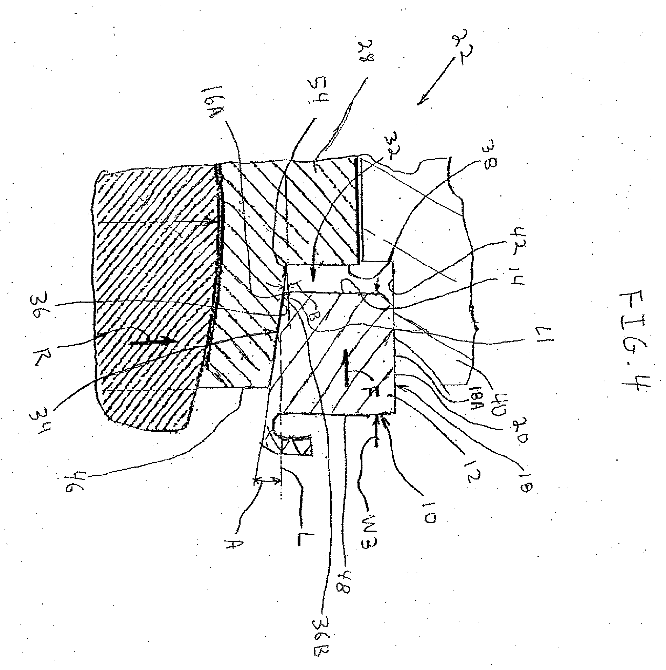

As illustrated in FIG. 3 the angle A is greater than the angle B when the support 10 is in an initial stage of installation (FIG. 3). When in the initial stage of installation, a leading edge 16A of the inside surface 16 engages a leading edge 36A of the conical outer surface 36. In an intermediate stage of installation (FIG. 4), the support 10 is threaded partially into the pocket 32. In the intermediate stage, the inside surface 16 engages the conical outer surface 36 and the leading edge 16A is positioned between the second end 46 of the outer race 28 and the axial facing shoulder 38. During installation of the support 10 into the pocket 32 of the outer race 28 the support is wedged between the outer race 28 and the body 40. During installation of the support 10 into the pocket 32, the inside surface 16A of the support and/or the conical outer surface 36 of the outer race 28 conform such that the angle A and the angle B are substantially equal.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A spherical bearing (22) comprising:
a body (40);
an inner race (24) having a substantially spherical outer surface (26);
an outer race (28) positioned around the inner race (24) such that the outer race (28) has a first width (W1) and the inner race (24) has a second width (W2), the second width (W2) being greater than the first width (W1), the outer race (28) having a substantially spherical inner surface (30), a first end (44) and a second end (46) and defining a pocket (32) located proximate the second end (46) thereof, the pocket (32) defined by a conical outer surface (36) of the outer race (28), an axial facing shoulder (38) of the outer race (28) and internal threads (42) of the body (40), the first end (44) of the outer race (28) defining a first opening (15A) having a first radius (R1) and the second end (46) defining a larger second opening (15B) having a second radius (R2);
a support (10) removably disposed in the pocket (32) and being positioned between axial ends of the spherical bearing (22), the support (10) being a substantially annular ring (12) defining an axial facing abutment surface (14) and an inside surface (16) being sloped radially outward toward the abutment surface (14) by about six to about ten degrees relative to a central axis of the annular ring (12), the annular ring (12) defining an outer circumferential surface (20) having a locking mechanism (18) thereon being removably engaged with the internal threads (42) of the body (40) to secure the annular ring (12) and the spherical bearing (22) to the body (40);
the abutment surface (14) engaging the axial facing shoulder (38), and the inside surface (16) engaging the conical outer surface (36); and
the support is compressed between the internal threads (42), the shoulder (38) and the outer conical surface (36), and the support (10) being operable to limit axial movement of the inner race (24) relative to the outer race (28), wherein the inside surface (16) is configured to impart a radially inward wedging force on the conical outer surface (36) to limit outward radial movement of the outer race (28),
wherein adjustment of the support (10) in the pocket (32) affects a break away torque required to cause movement between the inner race (24) and the outer race (28).

2. The spherical bearing (22) of claim 1, wherein the locking mechanism (18) comprises a threaded area (18A).

3. The spherical bearing (22) of claim 1, wherein the inside surface (16) is sloped radially outward by about 8 degrees relative to the central axis of the annular ring (12).

4. The spherical bearing (22) of claim 1, wherein, the annular ring (12) has an axial width (W3) of about 10 to 20 percent of an axial width (W2) of the inner race (24).

5. The spherical bearing (22) of claim 1, wherein the annular ring (12) includes a lip (60) extending therefrom, the lip (60) being operable to receive a portion of a seal (63) therein.

6. The spherical bearing (22) of claim 1, wherein when the support (10) is installed in the pocket (32); the support (10), the conical outer surface (36) and the axialfacing shoulder (38) are in a fatigue resistant compressed state.

7. The spherical bearing (22) of claim 1, wherein:
the inner race (24) has a maximum radius (R3) that is greater than the first radius (R1) and the second radius (R2); and
the second opening (15B) is sized to receive the inner race (24) by temporarily expanding the second opening (15B) during assembly.

8. The spherical bearing (22) of claim 1, wherein the first end (44) has a first thickness (T1) and the second end (46) has a second thickness (T2) that is less than the first thickness (T1).

9. The spherical bearing (22) of claim 1, wherein the support (10) is positioned inboard of the first end (44) and the second end (46) of the outer race (28).

10. The spherical bearing (22) of claim 1, wherein a second surface (48) of the support (10) opposite the abutment surface (14) is substantially coplanar with the second end (46) of the outer race (28).

11. The spherical bearing (22) of claim 1, wherein the support (10) includes a plurality of axial bores (72) extending partially therein for receiving a tool for applying torque to the support (10).

12. The spherical bearing (22) of claim 1, wherein the inner race (24) has a third end and a fourth end and the support (10) is positioned inboard of the third and fourth ends of the inner race (24).

13. A spherical bearing (122) comprising:
a body (140);
an inner race (24) having a substantially spherical outer surface (26);
an outer race (128) positioned around the inner race (24) such that the outer race (128) has a first width (W1) and the inner race (24) has a second width (W2), the second width (W2) being greater than the first width (W1), the outer race (128) having a substantially spherical inner surface (30), a first end (44) and a second end (146) and defining a pocket (132) located proximate the second end (146) thereof, the pocket (132) defined by a conical inwardly facing surface (136) of the body (140), an axial facing shoulder (138) of the outer race (128) and an outwardly facing threaded area (142) of the outer race (128), the first end (44) of the outer race (128) defines a first opening (15A) having a first radius (R1) and the second end (146) defines a larger second opening (15B) having a second radius (R2);
a support (110) removably disposed in the pocket (132) and being positioned between axial ends of the spherical bearing (122), the support (110) being a substantially annular ring (112) defining an axial facing abutment surface (114) and an outside surface (116) being sloped radially inward toward the abutment surface (114) by about six to about ten degrees relative to a central axis of the annular ring (112), the annular ring (112) defining an inner circumferential surface having a locking mechanism (118) thereon being removably engaged with the outwardly facing threaded area (142) of the outer race (128) to secure the annular ring (112) to the outer race (128);
the abutment surface (114) engaging the axial facing shoulder (138), and the outside surface (116) engaging the conical outer surface (136) of the body (140); and
the support (110) is compressed between the shoulder (138), the conical inwardly facing surface (136) and the outwardly facing threaded area (142), the support (110) being operable to limit axial movement of the inner race (24) relative to the outer race (128), wherein the conical inwardly facing surface (136) is configured to impart a radially inward wedging force on the support (110) to limit outward radial movement of the outer race (128),
wherein adjustment of the support (110) in the pocket (132) affects a break away torque required to cause movement between the inner race (24) and the outer race (128).

## Patentansprüche

1. Kugellager (22), umfassend:
einen Körper (40);
einen Innenring (24) mit einer im Wesentlichen kugelförmigen Außenfläche (26);
einen Außenring (28), der so um den Innenring (24) herum positioniert ist, dass der Außenring (28) eine erste Breite (W1) aufweist und der Innenring (24) eine zweite Breite (W2) aufweist, wobei die zweite Breite (W2) größer als die erste Breite (W1) ist, der Außenring (28) eine im Wesentlichen kugelförmige Innenfläche (30), ein erstes Ende (44) und ein zweites Ende (46) aufweist und eine Tasche (32) bestimmt, die sich in der Nähe seines zweiten Endes (46) befindet, die Tasche (32) durch eine konische Außenfläche (36) des Außenrings (28), eine axiale Planschulter (38) des Außenrings (28) und Innengewinde (42) des Körpers (40) bestimmt ist, das erste Ende (44) des Außenrings (28) eine erste Öffnung (15A) mit einem ersten Radius (R1) bestimmt und das zweite Ende (46) eine größere zweite Öffnung (15B) mit einem zweiten Radius (R2) bestimmt;
einen Träger (10), der demontierbar in der Tasche (32) angeordnet ist und zwischen axialen Enden des Kugellagers (22) positioniert ist, wobei der Träger (10) ein Ring mit einem im Wesentlichen kreisförmigen Querschnitt (12) ist, der eine axiale Planwiderlagerfläche (14) und eine Innenfläche (16), die in Richtung der Widerlagerfläche (14) um ca. sechs bis ca. zehn Grad relativ zu einer Mittelachse des Rings mit einem kreisförmigen Querschnitt (12) radial nach außen geneigt ist, bestimmt, der Ring mit einem kreisförmigen Querschnitt (12) eine Außenumfangsfläche (20) bestimmt, auf der sich ein Arretiermechanismus (18) befindet, der demontierbar mit den Innengewinden (42) des Körpers (40) in Eingriff ist, um den Ring mit einem kreisförmigen Querschnitt (12) und das Kugellager (22) an dem Körper (40) zu befestigen;
wobei die Widerlagerfläche (14) in Eingriff mit der axialen Planschulter (38) ist und die Innenfläche (16) in Eingriff mit der konischen Außenfläche (36) ist; und
wobei der Träger zwischen den Innengewinden (42), der Schulter (38) und der konischen Außenfläche (36) zusammengedrückt ist und der Träger (10) so betätigbar ist, dass er die Axialbewegung des Innenrings (24) relativ zu dem Außenring (28) beschränkt, wobei die Innenfläche (16) so ausgestaltet ist, dass sie der konischen Außenfläche (36) eine radial nach innen gerichtete Verkeilungskraft erteilt, um die nach außen gerichtete Radialbewegung des Außenrings (28) zu beschränken,
wobei die Justierung des Trägers (10) in der Tasche (32) ein Losbrechmoment beeinflusst, das erforderlich ist, um eine Bewegung zwischen dem Innenring (24) und dem Außenring (28) zu bewirken.

2. Kugellager (22) nach Anspruch 1, wobei der Arretiermechanismus (18) einen mit Gewinde versehenen Bereich (18A) umfasst.

3. Kugellager (22) nach Anspruch 1, wobei die Innenfläche (16) um ca. 8 Grad relativ zu der Mittelachse des Rings mit einem kreisförmigen Querschnitt (12) radial nach außen geneigt ist.

4. Kugellager (22) nach Anspruch 1, wobei der Ring mit einem kreisförmigen Querschnitt (12) eine axiale Breite (W3) von ca. 10 bis 20 Prozent einer axialen Breite (W2) des Innenrings (24) aufweist.

5. Kugellager (22) nach Anspruch 1, wobei der Ring mit einem kreisförmigen Querschnitt (12) eine Nase (60) einschließt, die sich von ihm aus erstreckt, wobei die Nase (60) so betätigbar ist, dass sie einen Abschnitt einer Dichtung (63) in sich aufnimmt.

6. Kugellager (22) nach Anspruch 1, wobei, wenn der Träger (10) in der Tasche (32) installiert ist, der Träger (10), die konische Außenfläche (36) und die axiale Planschulter (38) sich in einem ermüdungsbeständigen zusammengedrückten Zustand befinden.

7. Kugellager (22) nach Anspruch 1, wobei:
der Innenring (24) einen maximalen Radius (R3) aufweist, der größer als der erste Radius (R1) und der zweite Radius (R2) ist; und
die Größe der zweiten Öffnung (15B) so bemessen ist, dass sie den Innenring (24) durch vorübergehendes Weiten der zweiten Öffnung (15B) während der Montage aufnimmt.

8. Kugellager (22) nach Anspruch 1, wobei das erste Ende (44) eine erste Dicke (T1) aufweist und das zweite Ende (46) eine zweite Dicke (T2) aufweist, die geringer als die erste Dicke (T1) ist.

9. Kugellager (22) nach Anspruch 1, wobei der Träger (10) bezüglich des ersten Endes (44) und des zweiten Endes (46) des Außenrings (28) nach innen gerichtet positioniert ist.

10. Kugellager (22) nach Anspruch 1, wobei eine zweite Oberfläche (48) des Trägers (10) gegenüber der Widerlagerfläche (14) im Wesentlichen koplanar mit dem zweiten Ende (46) des Außenrings (28) ist.

11. Kugellager (22) nach Anspruch 1, wobei der Träger (10) eine Mehrzahl von sich teilweise darin erstreckenden Axialbohrungen (72) zur Aufnahme eines Werkzeugs zum Anwenden einer Drehkraft auf den Träger (10) einschließt.

12. Kugellager (22) nach Anspruch 1, wobei der Innenring (24) ein drittes Ende und ein viertes Ende aufweist und der Träger (10) bezüglich des dritten und des vierten Endes des Innenrings (24) nach innen gerichtet positioniert ist.

13. Kugellager (122), umfassend:
einen Körper (140);
einen Innenring (24) mit einer im Wesentlichen kugelförmigen Außenfläche (26);
einen Außenring (128), der so um den Innenring (24) herum positioniert ist, dass der Außenring (128) eine erste Breite (W1) aufweist und der Innenring (24) eine zweite Breite (W2) aufweist, wobei die zweite Breite (W2) größer als die erste Breite (W1) ist, der Außenring (128) eine im Wesentlichen kugelförmige Innenfläche (30), ein erstes Ende (44) und ein zweites Ende (146) aufweist und eine Tasche (132) bestimmt, die sich in der Nähe seines zweiten Endes (146) befindet, die Tasche (132) durch eine konische nach innen gewandte Oberfläche (136) des Körpers (140), eine axiale Planschulter (138) des Außenrings (128) und einen nach außen gewandten, mit Gewinde versehenen Bereich (142) des Außenrings (128) bestimmt ist, das erste Ende (44) des Außenrings (128) eine erste Öffnung (15A) mit einem ersten Radius (R1) bestimmt und das zweite Ende (146) eine größere zweite Öffnung (15B) mit einem zweiten Radius (R2) bestimmt;
einen Träger (110), der demontierbar in der Tasche (132) angeordnet ist und zwischen axialen Enden des Kugellagers (122) positioniert ist, wobei der Träger (110) ein Ring mit einem im Wesentlichen kreisförmigen Querschnitt (112) ist, der eine axiale Planwiderlagerfläche (114) und eine Außenfläche (116), die in Richtung der Widerlagerfläche (114) um ca. sechs bis ca. zehn Grad relativ zu einer Mittelachse des Rings mit einem kreisförmigen Querschnitt (112) radial nach innen geneigt ist, bestimmt, der Ring mit einem kreisförmigen Querschnitt (112) eine Innenumfangsfläche bestimmt, auf der sich ein Arretiermechanismus (118) befindet, der demontierbar mit dem nach außen gewandten, mit Gewinde versehenen Bereich (142) des Außenrings (128) in Eingriff ist, um den Ring mit einem kreisförmigen Querschnitt (112) an dem Außenring (128) zu befestigen;
wobei die Widerlagerfläche (114) in Eingriff mit der axialen Planschulter (138) ist und die Außenfläche (116) in Eingriff mit der konischen Außenfläche (136) des Körpers (140) ist; und
wobei der Träger (110) zwischen der Schulter (138), der konischen nach innen gewandten Oberfläche (136) und dem nach außen gewandten, mit Gewinde versehenen Bereich (142) zusammengedrückt ist, der Träger (110) so betätigbar ist, dass er die Axialbewegung des Innenrings (24) relativ zu dem Außenring (128) beschränkt, wobei die konische nach innen gewandte Oberfläche (136) so ausgestaltet ist, dass sie dem Träger (110) eine radial nach innen gerichtete Verkeilungskraft erteilt, um die nach außen gerichtete Radialbewegung des Außenrings (128) zu beschränken,
wobei die Justierung des Trägers (110) in der Tasche (132) ein Losbrechmoment beeinflusst, das erforderlich ist, um eine Bewegung zwischen dem Innenring (24) und dem Außenring (128) zu bewirken.

## Revendications

1. Palier sphérique (22) comprenant :
un corps (40) ;
un chemin de roulement interne (24) ayant une surface externe (26) sensiblement sphérique ;
un chemin de roulement externe (28) positionné autour du chemin de roulement interne (24) de sorte que le chemin de roulement externe (28) a une première largeur (W1) et le chemin de roulement interne (24) a une seconde largeur (W2), la seconde largeur (W2) étant supérieure à la première largeur (W1), le chemin de roulement externe (28) ayant une surface interne (30) sensiblement sphérique, une première extrémité (44) et une deuxième extrémité (46) et définissant une poche (32) positionnée à proximité de sa deuxième extrémité (46), la poche (32) étant définie par une surface externe conique (36) du chemin de roulement externe (28), un épaulement axial en vis-à-vis (38) du chemin de roulement externe (28) et des filetages internes (42) du corps (40), la première extrémité (44) du chemin de roulement externe (28) définissant une première ouverture (15A) ayant un premier rayon (R1) et une deuxième extrémité (46) définissant une seconde ouverture (15B) plus grande ayant un second rayon (R2) ;
un support (10) disposé, de manière amovible, dans la poche (32) et étant positionné entre des extrémités axiales du palier sphérique (22), le support (10) étant une bague sensiblement annulaire (12) définissant une surface de butée en vis-à-vis axiale (14) et une surface intérieure (16) qui est inclinée radialement vers l'extérieur vers la surface de butée (14) d'environ six à environ dix degrés par rapport à un axe central de la bague annulaire (12), la bague annulaire (12) définissant une surface circonférentielle externe (20) ayant un mécanisme de verrouillage (18) sur cette dernière qui est mis en prise, de manière amovible, avec les filetages internes (42) du corps (40) pour fixer la bague annulaire (12) et le palier sphérique (22) sur le corps (40) ;
la surface de butée (14) mettant en prise l'épaulement en vis-à-vis axial (38), et la surface intérieure (16) mettant en prise la surface externe conique (36) ; et
le support est comprimé entre les filetages internes (42), l'épaulement (38) et la surface conique externe (36), et le support (10) pouvant fonctionner pour limiter le mouvement axial du chemin de roulement interne (24) par rapport au chemin de roulement externe (28), dans lequel la surface intérieure (16) est configurée pour transmettre une force de calage radialement interne sur la surface externe conique (36) afin de limiter le mouvement radial vers l'extérieur du chemin de roulement externe (28),
dans lequel l'ajustement du support (10) dans la poche (32) affecte un couple de rupture nécessaire pour provoquer le mouvement entre le chemin de roulement interne (24) et le chemin de roulement externe (28).

2. Palier sphérique (22) selon la revendication 1, dans lequel le mécanisme de verrouillage (18) comprend une zone filetée (18A).

3. Palier sphérique (22) selon la revendication 1, dans lequel la surface intérieure (16) est inclinée radialement vers l'extérieur d'environ 8 degrés par rapport à l'axe central de la bague annulaire (12).

4. Palier sphérique (22) selon la revendication 1, dans lequel la bague annulaire (12) a une largeur axiale (W3) d'environ 10 à 20 pourcent d'une largeur axiale (W2) du chemin de roulement interne (24).

5. Palier sphérique (22) selon la revendication 1, dans lequel la bague annulaire (12) comprend une lèvre (60) s'étendant à partir de cette dernière, la lèvre (60) étant opérationnelle pour recevoir une partie d'un joint d'étanchéité (63) à l'intérieur de cette dernière.

6. Palier sphérique (22) selon la revendication 1, dans lequel lorsque le support (10) est installé dans la poche (32) ; le support (10), la surface externe conique (36) et l'épaulement en vis-à-vis axial (38) sont dans un état comprimé résistant à la fatigue.

7. Palier sphérique (22) selon la revendication 1, dans lequel :
le chemin de roulement interne (24) a un rayon maximum (R3) qui est supérieur au premier rayon (R1) et au second rayon (R2) ; et
la seconde ouverture (15B) est dimensionnée pour recevoir le chemin de roulement interne (24) en dilatant temporairement la seconde ouverture (15B) pendant l'assemblage.

8. Palier sphérique (22) selon la revendication 1, dans lequel la première extrémité (44) a une première épaisseur (T1) et la deuxième extrémité (46) a une seconde épaisseur (T2) qui est inférieure à la première épaisseur (T1) .

9. Palier sphérique (22) selon la revendication 1, dans lequel le support (10) est positionné à l'intérieur de la première extrémité (44) et de la deuxième extrémité (46) du chemin de roulement externe (28).

10. Palier sphérique (22) selon la revendication 1, dans lequel une seconde surface (48) du support (10) opposée à la surface de butée (14) est sensiblement coplanaire avec la deuxième extrémité (46) du chemin de roulement externe (28).

11. Palier sphérique (22) selon la revendication 1, dans lequel le support (10) comprend une pluralité d'alésages axiaux (72) s'étendant partiellement à l'intérieur de ce dernier pour recevoir un outil afin d'appliquer le couple sur le support (10).

12. Palier sphérique (22) selon la revendication 1, dans lequel le chemin de roulement interne (24) a une troisième extrémité et une quatrième extrémité et le support (10) est positionné à l'intérieur des troisième et quatrième extrémités du chemin de roulement interne (24).

13. Palier sphérique (122) comprenant :
un corps (140) ;
un chemin de roulement interne (24) ayant une surface externe (26) sensiblement sphérique ;
un chemin de roulement externe (128) positionné autour du chemin de roulement interne (24) de sorte que le chemin de roulement externe (128) a une première largeur (W1) et le chemin de roulement interne (24) a une seconde largeur (W2), la seconde largeur (W2) étant supérieure à la première largeur (W1), le chemin de roulement externe (128) ayant une surface interne (30) sensiblement sphérique, une première extrémité (44) et une deuxième extrémité (146) et définissant une poche (132) positionnée à proximité de sa deuxième extrémité (146), la poche (132) étant définie par une surface orientée vers l'intérieur conique (136) du corps (140), un épaulement en vis-à-vis axial (138) du chemin de roulement externe (128) et une zone filetée orientée vers l'extérieur (142) du chemin de roulement externe (128), la première extrémité (44) du chemin de roulement externe (128) définit une première ouverture (15A) ayant un premier rayon (R1) et la deuxième extrémité (146) définit une seconde ouverture (15B) plus grande ayant un second rayon (R2) ;
un support (110) disposé, de manière amovible, dans la poche (132) et étant positionné entre les extrémités axiales du palier sphérique (122), le support (110) étant une bague sensiblement annulaire (112) définissant une surface de butée en vis-à-vis axiale (114) et une surface extérieure (116) qui est inclinée radialement vers l'intérieur vers la surface de butée (114) à environ six à environ dix degrés par rapport à un axe central de la bague annulaire (112), la bague annulaire (112) définissant une surface circonférentielle interne ayant un mécanisme de verrouillage (118) sur cette dernière, qui est mis en prise, de manière amovible, avec la zone filetée orientée vers l'extérieur (142) du chemin de roulement externe (128) pour fixer la bague annulaire (112) sur le chemin de roulement externe (128) ;
la surface de butée (114) mettant en prise l'épaulement en vis-à-vis axial (138), et la surface extérieure (116) mettant en prise la surface externe conique (136) du corps (140) ; et
le support (110) est comprimé entre l'épaulement (138), la surface orientée vers l'intérieur conique (136) et la zone filetée orientée vers l'extérieur (142), le support (110) étant opérationnel pour limiter le mouvement axial du chemin de roulement interne (24) par rapport au chemin de roulement externe (128), dans lequel la surface orientée vers l'intérieur conique (136) est configurée pour transmettre une force de calage radialement vers l'intérieur sur le support (110) afin de limiter le mouvement radial vers l'extérieur du chemin de roulement externe (128),
dans lequel l'ajustement du support (110) dans la poche (132) affecte un couple de rupture nécessaire pour provoquer le mouvement entre le chemin de roulement interne (24) et le chemin de roulement externe (128).
